# FASCICULE DE BREVET EUROPEEN

(11) **EP 2 113 476 B1**
(45) Date de publication et mention de la délivrance du brevet: **26.10.2011**
(21) Numéro de dépôt: 09005609.4
(22) Date de dépôt: 22.04.2009
(51) Int. Cl.: B65G 69/00, B60T 3/00

(54) **Equipement de sécurité pour quais de chargement ou déchargement de marchandises**
Sicherheitsvorrichtung für Verladerampen oder Entladerampen
Safety device for loading or unloading bays

(30) Priorité: 28.04.2008 FR 0802414
(43) Date de publication de la demande: 04.11.2009
(73) Titulaire: Glomot-Penot Systemes, 87290 Saint-Sorlin-Leulac (FR)
(72) Inventeur: Penot, Etienne, 87290 Saint-Sorlin-Leulac (DE)
(74) Mandataire: Myon, Gérard Jean-Pierre

(56) Documents cités:
- US-A1- 2006 181 391
- "A SAFER LOADING BAY" MATERIALS HANDLING NEWS, NEXUS MEDIA COMMUNICATIONS, SWANLEY, KENT, GB, no. 558, 1 juin 2004 (2004-06-01), page 35, XP001196640 ISSN: 0025-5351

## Description

La présente invention concerne les quais de chargement ou de déchargement de marchandises du type de ceux dans lesquels s'effectue le transbordement de colis entre un entrepôt et des véhicules de transport, qu'il s'agisse d'amener les colis dans l'entrepôt ou de les emmener de là pour les livrer ailleurs, elle concerne un équipement de securité pour quais selon le préambule de la revendication 1 et une utilisation d'un équipement selon le préambule de la revendication 8. Elle vise essentiellement à équiper de tels quais de moyens automatiques d'information tendant à améliorer les conditions de travail à leur abord, notamment du point de vue de la sécurité, celle des manutentionnaires et autres opérateurs comme celle des marchandises transportées.

Dans ses modes de mise en oeuvre préférés, l'invention implique des cales que le personnel des quais est habitué à utiliser pour bloquer les roues des véhicules et immobiliser ainsi ces derniers dans une position appropriée par rapport au quai. Cependant d'autres outils peuvent être utilisés aux mêmes fins, dans ia mesure où l'on considère que le plus important est qu'ils aient à être placés dans une position déterminée pour signaler que des opérations de chargement ou de déchargement peuvent être entreprises. L'équipement selon le préambule de la revendication 1 est décrit dans le document "A safer loading bay", MATERIALS HANDLING NEWS, NEXUS MEDIA COMMUNICATIONS, SWANLEY, KENT, GB, no, 558,1 juin 2004.

Conformément à l'invention, il est proposé d'équiper un chemin d'accès des véhicules au quai d'une série d'étiquettes de radio-identification se succédant le long de ce chemin et de vérifier, grâce à des moyens appropriés associés audit quai, si un dispositif de repérage porteur de lecteurs de ces étiquettes est disposé ou non dans une position déterminée respectant un sens prédéfini par rapport à la succession d'étiquettes le long du chemin d'accès au quai. L'information résultant de cette vérification est utilisée notamment pour avertir les manutentionnaires qu'un véhicule arrivé à quai est en situation autorisant les opérations de chargement ou déchargement. Le dispositif de repérage est avantageusement réalisé sous la forme d'une cale de blocage des roues du véhicule ou de tout autre moyen pour immobiliser ce dernier à quai.

Dans un tel contexte, l'invention s'exprime notamment sous la forme d'un équipement pour quai de chargement ou de déchargement de marchandises qui se caractérise en ce qu'à chaque quai il est associé :
- d'une part des étiquettes de radio-identification disposées en série le long d'un chemin d'accès au quai pour des véhicules de transport des marchandises à charger ou décharger,
- d'autre part un dispositif de repérage de présence ou non d'un tel véhicule à quai comportant deux capteurs distants l'un de l'autre qui sont aptes à coopérer avec lesdites étiquettes en lecture et en retransmission de leurs informations d'identification,
- ainsi que des moyens d'analyse pour déterminer, à partir des informations d'identification des étiquettes et d'un attribut propre à chaque lecteur, dans quel ordre se placent les lecteurs par comparaison à l'ordre de succession des étiquettes dans la série. La présente invention a pour objet un équipement de sécurité selon la revendication 1.

Suivant ses modes de mise en oeuvre préférés, l'invention a donc l'avantage de faire appel aux techniques de télécommunication sans fil pour transmettre les informations nécessaires à la vérification d'une position correcte du dispositif de repérage, ainsi que pour émettre éventuellement un signal à destination des manutentionnaires les autorisant à procéder aux opérations de chargement ou de déchargement des véhicules amenés à quai. Ces techniques passent avantageusement par l'emploi de puces RFID (pour "radio-frequency identification" en anglais), d'où notamment une grande commodité de mise en place de l'équipement suivant l'invention dans des quais ou groupes de quais existants. Par exemple, les différentes étiquettes peuvent être individuellement intégrées dans une simple saignée pratiquée dans le sol, les lecteurs étant fixés sur l'embase d'outils usuels confirmant l'immobilisation des camions de transport de marchandises. Selon d'autres modes de réalisation, les étiquettes peuvent être intégrées à des bandes de signalisation qui sont ensuite collées au sol. A titre d'exemple non limitatif dans ce cas, elles peuvent être collées sur la face inférieure, destinée à être collée au sol, d'une telle bande de signalisation.

De manière préférentielle, chaque quai d'un entrepôt ou de tout autre ensemble de chargement et de déchargement de marchandises vers et à partir de véhicules amenés à quai comporte ainsi, suivant l'invention, des étiquettes de radio-identification disposées en série le long d'un chemin d'accès au quai pour des véhicules de transport de marchandises à charger ou décharger, lesdites étiquettes étant, d'une part, porteuses et émettrices d'une information d'identification caractéristique de l'ordre de succession des étiquettes dans la série, et, d'autre part, lorsque l'ensemble de chargement et de déchargement comporte plusieurs quais, porteuses et émettrices d'une information d'identification caractéristique du quai le long du chemin d'accès auquel les étiquettes sont placées dans la série de quais.

En association avec ces étiquettes, il est prévu d'utiliser, pour chaque véhicule stationné à quai, un dispositif mobile de repérage à placer dans une position déterminée par rapport à ce véhicule, position dans laquelle deux lecteurs transmetteurs d'ondes radio placés sur ce dispositif de repérage captent les signaux émis par au moins deux étiquettes différentes de la série, pour renvoyer à destination d'un système d'analyse associé au quai ou à l'ensemble de quais concernés des signaux porteurs des informations d'identification propres à chacune des étiquettes lues et d'une information d'attribut de lecteur distinguant les deux lecteurs l'un de l'autre.

Au niveau du système d'analyse, des moyens de traitement informatiques sont programmés pour vérifier, en fonction de l'ensemble des informations d'étiquette et des informations de lecteur, si le dispositif de repérage a été placé correctement dans sa position déterminée relativement au quai, en respectant un sens prédéfini entre les deux lecteurs du plus proche au plus lointain relativement au quai dans l'ordre de succession des étiquettes dans la série.

Pour plus de clarté, l'invention sera plus précisément décrite dans ce qui suit selon son mode de réalisation préféré dans lequel le dispositif de repérage est une cale destinée à être placée contre une roue d'un véhicule stationné à quai pour compléter l'immobilisation de celui-ci. Une telle cale, de forme générale prismatique, comporte donc avantageusement, au plus près de sa face destinée à reposer sur le sol, deux lecteurs radiofréquence distincts aussi éloignés que possible l'un de l'autre que le permettent la géométrie et la dimension de la cale, les deux lecteurs radiofréquence étant avantageusement répartis sur un alignement parallèlement à l'orientation des étiquettes de radio-identification disposées en série le long d'un chemin d'accès au quai.

L'invention prévoit que ces deux lecteurs soient aptes à recevoir les informations en provenance de toutes les étiquettes qui sont placées à leur voisinage, et que le système d'analyse mette en oeuvre des algorithmes de discrimination de type par ailleurs connu en soi dans les dispositifs RFID pour que le système d'analyse ne retienne, pour chacun des lecteurs, que l'information émise par une et une seule étiquette. A titre d'exemple non limitatif, le système d'analyse retiendra avantageusement l'information émise par l'étiquette qui est la plus proche de chaque lecteur, ou, si le lecteur est situé à égale distance de deux étiquettes consécutives, ne retiendra typiquement que l'information provenant de l'étiquette la plus proche du quai.

Selon une autre de ses caractéristiques, l'invention prévoit que, tant qu'aucun véhicule n'est stationné à quai, la cale soit placée sur un support approprié disposé sur le quai, et que ce support soit équipé d'un détecteur relié par des moyens de télécommunication, qui peuvent être des moyens de télécommunication sans fil, au système d'analyse pour envoyer à celui-ci une information de présence ou d'absence de ladite cale. Avantageusement, ce support est relié à un dispositif d'alimentation électrique permettant de recharger en puissance notamment l'émetteur radiofréquence de chacun des lecteurs placés sur la cale, afin que ceux-ci puissent de manière fiable, d'une part, émettre un signal radiofréquence d'activation et d'interrogation des étiquettes de radio-identification placées le long du chemin d'accès au quai, et, d'autre part, transmettre au système d'analyse les informations émises en retour par ces étiquettes radiofréquence.

L'invention prévoit également, selon une autre de ses caractéristiques, que la cale comporte avantageusement des moyens de détection de la présence d'un pneu d'un véhicule à son voisinage, ainsi que des moyens d'émission, vers le système d'analyse, d'une information de présence d'un tel pneu. A titre d'exemple non limitatif, les moyens de détection de la présence d'un pneu d'un véhicule à proximité de la cale peuvent comprendre une boucle inductive fermée lorsque la cale est disposée contre ledit pneu et ouverte dans le cas contraire, et associée à un contact électronique dont l'information d'ouverture ou de fermeture est transmise par des moyens de télécommunication sans fil au système d'analyse.

Le fonctionnement de l'équipement de sécurité selon l'invention est alors le suivant.

En l'absence de véhicule stationné à quai, la cale est disposée sur son support, qui renvoie alors au système d'analyse une information de présence de cette cale.

Plus précisément, le système d'analyse réalise un appariement de la cale avec le support de cale. Pour cela, l'invention prévoit que la cale soit porteuse d'une information d'identification propre, par exemple mais de manière non exclusive par le biais d'une étiquette de radio-identification, et que cette information d'identification puisse être lue par des moyens appropriés équipant le support de cale (à titre d'exemple non limitatif un lecteur de radio-identification), ainsi que par le système d'analyse. L'appariement est alors réalisé par l'association, par le système d'analyse, de l'information d'identification portée par la cale à une information d'identification du support de cale (par exemple un numéro d'ordre dans un ensemble de quais). Il est à noter qu'un tel appariement est avantageusement réalisé chaque fois qu'une cale est placée sur un support de cale dans des conditions qui seront précisées plus loin. Ainsi, chacune des cales peut être indifféremment utilisée avec chacun des supports de cale lorsque l'invention est mise en oeuvre pour un ensemble de quais.

Lorsqu'un véhicule est stationné à quai pour une opération de chargement et/ou de déchargement, la cale est retirée de son support pour être placée contre une roue de ce véhicule et assurer une immobilisation totale de celui-ci afin que les opérations de chargement et/ou de déchargement puissent être réalisées par les opérateurs du quai sans risque que le véhicule ne se déplace relativement au quai lors de ces opérations, ce qui compromettrait alors la sécurité des personnes et des marchandises.

Pour que ces opérations puissent se dérouler dans des conditions optimales de sécurité tant pour le personnel du quai que pour les marchandises, l'invention prévoit que, dès lors que la cale est retirée de son support, le détecteur de présence de cale dont celui-ci est muni envoie une information d'absence de la cale au système d'analyse associé au quai.

L'invention prévoit ensuite que les différents lecteurs et détecteurs placés sur la cale renvoient au système d'analyse associé au quai, d'une part, les informations reçues des étiquettes d'identification radiofréquence placées au voisinage de la cale, et, d'autre part, une information de détection ou non de la présence d'un pneu d'un véhicule au voisinage de ladite cale.

Selon une autre de ses caractéristiques, l'invention prévoit que le quai soit également équipé de moyens de signalisation indiquant, au bout d'un laps de temps prédéfini, par exemple représentatif du temps moyen nécessaire à la mise en place de la cale contre une roue du véhicule, si, d'une part, le système d'analyse a effectivement reçu les différentes informations transmises par les lecteurs radiofréquence et le détecteur de présence de pneu, et si, d'autre part, ces informations indiquent effectivement que la cale est correctement positionnée à la fois au voisinage d'un pneu du véhicule et dans le sens prédéterminé précédemment indiqué au regard de la succession des étiquettes le long du chemin d'accès au quai.

A titre d'exemple non limitatif, ces moyens de signalisation peuvent consister en un affichage lumineux de couleur différente selon que les informations reçues par le système d'analyse indiquent ou non que la cale a été disposée dans le sens prédéterminé et au voisinage du pneu d'un véhicule, par exemple un témoin lumineux vert quand la cale a été correctement disposée, et un témoin lumineux rouge dans le cas contraire, éventuellement associé à un signal sonore d'alerte dans ce dernier cas.

Dans un de ses modes de réalisation particuliers, l'invention prévoit que, une fois les informations de positionnement de la cale reçues et validées par le système d'analyse (détection de la présence d'un pneu du véhicule à proximité immédiate de la cale, sens prédéterminé de placement de la cale au regard de la succession d'étiquettes de radio-identification le long du chemin d'accès), la validation entreprise par ce dernier cesse. En d'autres termes, une fois le positionnement de la cale validé au voisinage du véhicule, le système d'analyse cesse de traiter les informations reçues des lecteurs radiofréquence et détecteur de présence de pneu, ce jusqu'à ce que la cale soit à nouveau déplacée.

Toutefois, selon un mode de réalisation particulièrement avantageux, l'invention prévoit que la cale transmette à intervalles de temps réguliers (à titre d'exemple non limitatif à intervalles de quelques secondes) tout ou partie de ses informations de positionnement au système d'analyse, par exemple les informations qu'elle reçoit des étiquettes radiofréquence disposées le long du chemin d'accès au quai.

Dans tous les cas, l'invention prévoit que l'information de validation de la position de la cale relativement au véhicule, ainsi que, le cas échéant, toute information de déplacement intempestif de cette cale au cours des opérations de manutention puisse être communiquée au personnel opérant sur le quai.

Pour cela, selon une autre des caractéristiques de l'invention, la cale est également avantageusement munie d'un détecteur, par exemple de type accéléromètre, apte à envoyer au système d'analyse une information de mouvement de ladite cale. Et l'invention prévoit que, dès lors que ce signal a été reçu et que le mouvement enregistré présente une amplitude supérieure à un seuil préalablement fixé, le système d'analyse vérifie l'information de détection de présence de pneu. Si, après une durée préalablement définie, une information de présence d'un pneu d'un véhicule n'a pas été reçue par le système d'analyse, l'invention prévoit alors que le système d'analyse commande, au bout d'une durée préalablement définie, la signalisation, sur le quai, d'une information représentative du retour ou non de la cale sur son support, sur la base de l'information de présence ou non de la cale transmise audit système d'analyse par le détecteur placé sur le support de celle-ci.

Ceci permet, d'une part, de garantir que la cale reste correctement positionnée relativement au véhicule tout au long de l'opération de chargement et/ou de déchargement, et qu'elle n'est pas déplacée, même légèrement, par inadvertance, ce qui pourrait mettre en danger la sécurité des opérations de manutention. Par ailleurs, ceci permet également, dans le cas où la cale est légèrement déplacée au cours des opérations de manutention, d'éviter tout déclenchement intempestif d'un signal d'alerte au niveau du quai indiquant que la cale a été déplacée mais n'a pas été replacée sur son support. Ceci permet, de plus, de supprimer tout risque de perte d'une cale, et permet enfin de s'assurer que chaque cale, au moment de son utilisation, est dans un état de charge suffisante pour que les lecteurs et détecteurs qu'elle comporte puissent fonctionner de manière optimale et pendant la durée nécessaire aux opérations de manutention des marchandises.

Une fois les opérations de chargement et/ou de déchargement terminées, la cale est retirée pour être remise sur le support avec lequel elle a été préalablement appariée. De manière analogue au cas où la cale est accidentellement déplacée durant les opérations de manutention, l'invention prévoit que le système d'analyse commande, après un laps de temps préalablement défini, l'affichage, sur le quai, d'une information représentative du retour ou non de ladite cale sur le support auquel elle a été préalablement appariée.

L'invention prévoit également que le système d'analyse commande les moyens d'affichage pour signaler une erreur dans le cas où une cale serait indûment replacée, après utilisation, sur un support différent de celui avec lequel elle a été appariée alors que, dans ie même temps, la cale appariée avec ce support est en cours d'utilisation. Concomitamment, l'invention prévoit également d'empêcher, dans ce cas, tout nouvel appariement de la cale replacée avec le support dont la cale est en cours d'utilisation.

Dans le cas où l'équipement de sécurité selon l'invention est mis en oeuvre pour un ensemble de quais, l'invention prévoit, selon différents modes de réalisation, qu'un système d'analyse soit associé à chaque quai, ou qu'un système central d'analyse et de supervision assure la gestion de l'ensemble des informations émises et reçues par l'ensemble des étiquettes d'identification placées le long des différents chemins d'accès aux différents quais, ainsi que par l'ensemble des lecteurs radiofréquence et détecteurs de présence de pneu disposés sur les différentes cales.

Selon l'une de ses caractéristiques dans le cas où un système d'analyse est associé à chacun des quais de l'ensemble de quais, l'invention prévoit qu'une cale retirée du support avec lequel elle est appariée sur un quai donné pour être disposée contre un pneu d'un véhicule stationné au regard de ce quai renvoie à la totalité des systèmes d'analyse de tous les quais situés à proximité les informations qu'elle reçoit des étiquettes radiofréquence qui sont situées dans son voisinage, ainsi que l'information de détection ou non de la présence d'un pneu à son voisinage immédiat. Dans ce cas, seul le système d'analyse ayant au préalable reçu du support avec lequel la cale a été appariée une information d'absence de cette cale retiendra les informations transmises par cette cale et indiquera, par les moyens de signalisation évoqués plus haut, si les opérations de chargement ou de déchargement du véhicule peuvent être commencées ou non. De même, si la cale est placée sur un véhicule en stationnement sur un quai différent de celui auquel elle a été associée par le biais de son appariement au support de cale, l'invention prévoit que le système d'analyse du quai avec lequel la cale est appariée commande, sur la base des informations d'étiquette transmises par cette cale, ies moyens d'affichage pour signaler une erreur de placement de cette dernière.

L'appariement de chaque cale permet donc ici d'éviter toute mise en défaut du système consécutivement à un éventuel placement de la cale au regard d'un quai autre que celui correspondant au support avec lequel elle a été appariée, notamment dans le cas où plusieurs quais situés côte à côte sont en situation d'accueillir chacun un véhicule devant être chargé et/ou déchargé de marchandises. Il permet de plus d'utiliser un système d'analyse identique pour chacun des quais, ce qui permet de préserver, à moindre coût, la modularité de l'équipement selon l'invention en autorisant l'ajout ou le retrait d'un ou plusieurs équipements sans répercussion sur les quais déjà équipés. Cette modularité est en outre renforcée par le fait que, ainsi qu'il a été indiqué plus haut, il est possible d'utiliser indifféremment n'importe quelle cale avec n'importe lequel des supports moyennant appariement préalable.

Dans le cas où un système central d'analyse et de supervision assure la gestion de l'ensemble des informations émises et reçues par l'ensemble des étiquettes de radio-identification placées le long des différents chemins d'accès aux différents quais, chaque cale renverra à celui-ci les informations qu'elle reçoit des étiquettes placées le long du chemin d'accès au quai muni du support de cale avec lequel elle a été appariée (chemin d'accès sur lequel est stationné le véhicule contre lequel elle est placée pour l'immobiliser), ainsi que l'information de détection ou non de la présence d'un pneu à son voisinage immédiat. L'invention prévoit alors, selon différents modes de réalisation, que le système central d'analyse et de supervision commande des moyens de signalisation disposés sur chacun des quais, ou des moyens de signalisation centralisés repérant chacun des différents quais et indiquant si des opérations de chargement et/ou de déchargement peuvent être entreprises dans des conditions de sécurité satisfaisantes pour ce qui concerne l'immobilisation du véhicule à charger et/ou à décharger.

II ressort de ce qui précède que l'invention permet, à tout moment, sur un quai donné, de connaître de manière simple, rapide, et peu coûteuse, l'état de placement d'une cale destinée à être disposée contre une roue d'un véhicule pour que des opérations de chargement et/ou de déchargement de marchandises depuis ou vers ce véhicule puissent être entreprises dans des conditions d'immobilisation de ce dernier satisfaisantes au regard de la sécurité des opérateurs du quai et des marchandises. II apparaît également que l'invention peut être mise en oeuvre de manière très simple et modulaire pour un ensemble de quais, sans complication du système d'analyse et de traitement des informations transmises par l'élément de repérage mobile - ici une cale dans ce qui vient d'être décrit -.

D'autres caractéristiques et avantages de l'invention ressortiront à la lecture de la description qui suit, illustrée par les figures suivantes dans lesquelles :

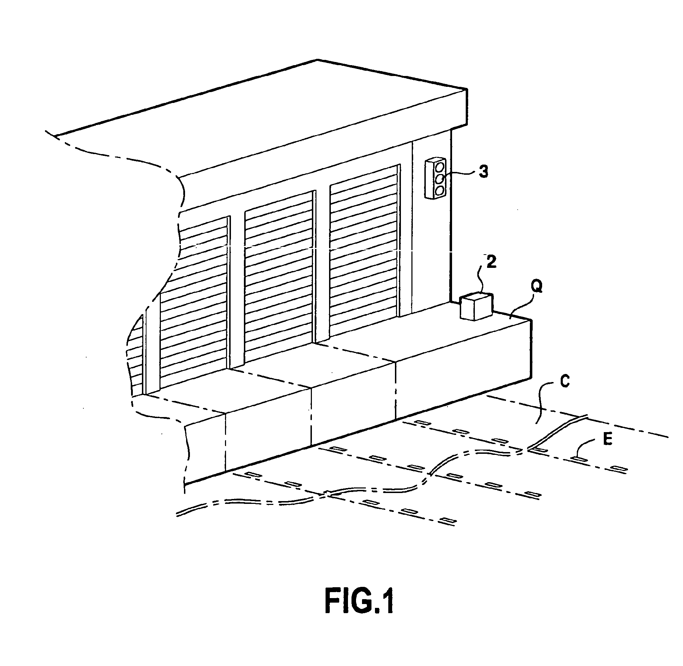

- la figure 1 représente une vue schématique d'ensemble de l'agencement d'étiquettes radiofréquence sur un ensemble de quais,

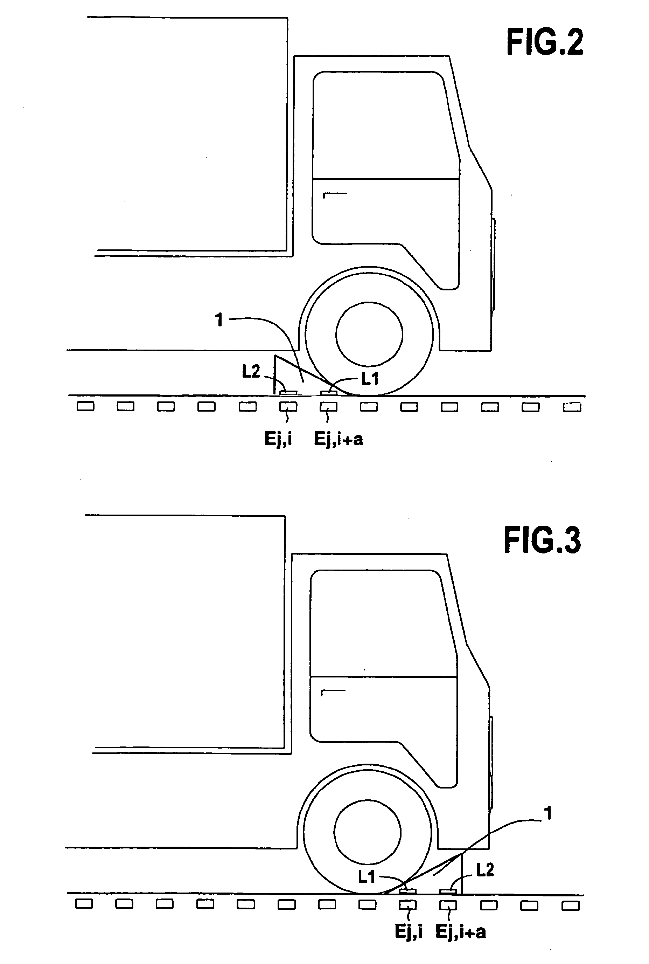

- la figure 2 est une vue schématique rapprochée d'un quai muni d'un équipement de sécurité selon l'invention dans une configuration dans laquelle l'élément mobile de repérage est une cale destinée à être placée contre une roue d'un véhicule, et dans laquelle cette cale est mal positionnée au regard du véhicule et du quai,
- et la figure 3 qui est une vue schématique rapprochée d'un quai muni d'un équipement de sécurité selon l'invention dans une configuration dans laquelle l'élément mobile de repérage est une cale destinée à être placée contre une roue d'un véhicule, et dans laquelle cette cale est correctement positionnée au regard du véhicule et du quai,

En référence à ces différentes figures, l'équipement de sécurité selon l'invention comporte un dispositif mobile de repérage 1 destiné à être placé dans une position prédéterminée relativement à un véhicule V stationné aux abords d'un quai Q. Selon le mode de réalisation préféré de l'invention représenté par les figures, ce dispositif mobile de repérage est une cale destinée à être placée contre l'une des roues du véhicule V pour compléter l'immobilisation de ce dernier et empêcher que celui-ci ne se déplace lors d'opérations de chargement et/ou de déchargement de marchandises, déplacement qui pourrait avoir pour effet de rendre incertaines ces opérations de manutention, voire de conduire à la chute de personnes ou d'engins entre le quai et le pas de chargement du véhicule.

La cale 1, de forme générale prismatique, comporte au moins deux lecteurs de radio-identification L1 et L2 aptes à recueillir et à transmettre à un système d'analyse (non représenté sur les figures) associé au quai Q les informations dont sont porteuses un ensemble d'étiquettes de radio-identification E réparties le long d'un chemin d'accès C du véhicule au quai Q. Ces lecteurs sont avantageusement placés au plus près de la face de la cale 1 destinée à être en contact avec le sol lorsque ladite cale est disposée contre l'une des roues du véhicule, et ils sont avantageusement aussi éloignés l'un de l'autre que le permettent les dimensions et la géométrie de la cale. Selon le mode de réalisation représenté par les figures, dans lequel la cale 1 présente, en vue de côté, la forme d'un triangle rectangle dont l'hypoténuse est destinée à venir au contact de l'une des roues du véhicule, les lecteurs L1 et L2 sont avantageusement disposés, l'un au voisinage de l'angle droit que forment la face d'appui de la cale sur le sol et l'une des faces de ladite cale, et l'autre au voisinage de l'angle opposé sur la face d'appui de la cale 1 sur le sol.

Il est à noter que, selon différents modes de réalisation non limitatifs de l'invention, les étiquettes de radio-identification E peuvent être équidistantes le long du chemin d'accès au quai, ou elles peuvent être disposées de manière à être plus rapprochées les unes des autres au voisinage du quai qu'à distance de celui-ci. Dans tous les cas, la distance entre deux étiquettes consécutives est préférentiellement faible comparativement à la distance séparant les deux lecteurs L1 et L2.

La cale 1 est également équipée d'un détecteur (non représenté sur les figures) de proximité d'un pneu d'un véhicule tel que le véhicule V. A titre d'exemple non limitatif, ce détecteur peut comprendre une boucle inductive, ouverte ou fermée selon que la cale est placée ou non à proximité d'un pneu. Selon l'invention, le détecteur de proximité émet en direction du système d'analyse un signal de présence ou non d'un pneu à proximité de la cale 1, signal représentatif de la réalité du positionnement de la cale 1 contre l'une des roues du véhicule V. Avantageusement, ce signal est transmis par des moyens de télécommunication sans fil.

La cale 1 est en outre équipée d'un détecteur de mouvement (non représenté sur les figures), par exemple de type accéléromètre, dont le signal, transmis au système d'analyse, est représentatif d'un mouvement ladite cale. Avantageusement, un seuil d'amplitude minimale d'un tel mouvement est appliqué à ce signal de telle manière que seuls les déplacements significatifs de cette cale soient pris en compte par le système d'analyse.

De plus, la cale 1 est porteuse d'une information d'identification, à titre d'exemple non limitatif sous la forme d'une étiquette de radio-identification (non représentée sur les figures).

Un support 2 de la cale 1 est, par ailleurs, placé sur le quai Q. Le support de cale 2 est destiné à accueillir la cale 1 dès lors qu'aucun véhicule n'est pas stationné au regard du quai Q. Avantageusement, le support de cale 2 est relié à des moyens d'alimentation électrique permettant de fournir au dispositif radiofréquence des lecteurs L1 et L2 l'énergie grâce à laquelle lesdits lecteurs peuvent, d'une part, activer l'émission, par les étiquettes de radio-identification E, des informations dont elles sont porteuses, et grâce à laquelle, d'autre part, lesdits lecteurs peuvent transmettre ces informations au système d'analyse.

Le support de cale 2 comporte également un détecteur (non représenté sur les figures) apte à transmettre au système d'analyse; préférentiellement par des moyens de télécommunication sans fil, une information représentative de la présence ou non de la cale 1 sur le support de cale 2.

Le support de cale 2 est, de plus, muni d'un dispositif de lecture de l'information d'identification dont la cale 1 est porteuse, par exemple et de manière non limitative, un lecteur de radio-identification dans le cas où l'information d'identification de la cale est inscrite sur une étiquette de radio-identification.

L'invention prévoit que le système d'analyse réalise l'appariement de la cale 1 au support 2 (et, par là, au quai sur lequel est placé ce support de cale) en associant l'information d'identification portée par ladite cale à une information d'identification attribuée au support de cale, par exemple un numéro d'ordre du quai sur lequel est placé ce support dans une série de quais. Il est à noter que, pour augmenter la souplesse et la modularité de l'installation selon l'invention, cet appariement est réalisé chaque fois qu'une cale quelconque est placée sur un support de cale quelconque. L'invention prévoit toutefois des moyens permettant d'éviter tout appariement intempestif d'une cale à un support de cale, par exemple dans le cas où une cale utilisée serait, par inadvertance, replacée sur un support de cale différent de celui avec lequel elle a été préalablement appariée et dont la cale serait en cours d'utilisation sur un véhicule immobilisé pour des opérations de chargement et/ou de déchargement de marchandises.

Selon une des caractéristiques de l'invention, chacune des étiquettes de radio-identification E est porteuse d'une information représentative de sa position dans la succession des étiquettes de radio-identification placées sur le même chemin d'accès C qu'elle. De même, si l'ensemble logistique comporte plusieurs quais, l'invention prévoit que chacune des étiquettes de radio-identification E soit également porteuse d'une information représentative du quai sur le chemin d'accès auquel elle est placée dans la série de quais de l'ensemble logistique.

Plus précisément, si N étiquettes de radio-identification E, numérotées de 1 à N, sont placées sur le chemin d'accès à l'un des P quais numérotés de 1 à P d'un ensemble logistique, chacune des étiquettes placées sur chacun des chemins d'accès C à chacun des quais Q sera porteuse d'une information de la forme Ej,i avec 1≤j≤P, et 1≤i≤N.

L'invention prévoit alors que chacun des lecteurs L1, L2 émette à destination des étiquettes E qui sont placées à son voisinage un signal d'interrogation et transmette, en retour, au système d'analyse, les informations de la forme Ej,i évoquée ci-dessus dont ces étiquettes sont porteuses, ainsi qu'une information représentative de chacun desdits lecteurs. Selon une autre des caractéristiques de l'invention, le système d'analyse comprend des algorithmes par ailleurs connus en soi réalisant, à partir de ces informations, pour chacun des lecteurs L1, L2, la sélection d'une et une seule de ces informations, représentative d'une et une seule des étiquettes E. A titre d'exemple non limitatif, le système d'analyse pourra ainsi ne retenir que l'information de la forme Ej,i provenant de l'étiquette la plus proche du lecteur concerné, ou encore, le système d'analyse pourra ne retenir que l'information de la forme Ej,i provenant de l'étiquette à la fois la plus proche du lecteur concerné et la plus proche du quai concerné.

Selon une autre des caractéristiques de l'invention, le système d'analyse comprend également des moyens de discrimination des lecteurs L1 et L2 entre eux, afin de pouvoir attribuer à chacun de ces lecteurs l'information de la forme Ej,i pertinente retenue pour celui-ci.

Selon l'invention, le système d'analyse comprend également des moyens de comparaison des informations de la forme Ej,i retenues pour chacun des lecteurs, afin de déterminer si la cale 1 a été ou non placée dans un sens prédéfini au regard de la succession des étiquettes E le long du chemin d'accès au quai considéré.

Le fonctionnement de l'équipement de sécurité selon l'invention est alors le suivant.

Lorsqu'un véhicule V est stationné au regard d'un quai Q pour y être chargé et/ou déchargé de marchandises, la cale 1 est retirée de son support 2 pour être placée contre une roue de ce véhicule afin de compléter l'immobilisation de celui-ci.

Les détecteurs de mouvement et de présence de la cale 1 sur son support transmettent alors au système d'analyse respectivement une information de mouvement de la cale 1 et une information de retrait de celle-ci de son support 2.

Une fois la cale 1 placée au voisinage de l'une des roues du véhicule V, les lecteurs L1 et L2 transmettent au système d'analyse les informations qu'ils reçoivent des étiquettes de radio-identification situées dans leur voisinage, et le système d'analyse réalise alors la comparaison de ces informations pour en déduire une information représentative du positionnement correct ou non de la cale 1 relativement à la succession des étiquettes E le long du chemin d'accès au quai.

Les figures 2 et 3 illustrent plus précisément la réalisation de cette comparaison, la figure 2 représentant un cas dans lequel la cale 1 n'a pas été placée correctement contre une roue du véhicule V et la figure 3 représentant un cas dans lequel la cale 1 a été correctement positionnée contre cette roue. Selon le mode de réalisation illustré par ces figures, les étiquettes E sont numérotées de 1 à N à partir du quai Q, et le système d'analyse retient, pour chacun des lecteurs L1 et L2, l'information de la forme Ej,i représentative de l'étiquette E à la fois la plus proche de ce lecteur et la plus proche du quai Q, c'est-à-dire, en d'autres termes, l'information de la forme Ej,i provenant de l'ensemble des étiquettes placées au voisinage de chacun des lecteurs pour laquelle l'indice i est le plus faible.

II apparaît alors que, dans le cas où la cale 1 n'a pas été placée correctement (voir la figure 2), le système d'analyse retiendra pour le lecteur L2 une information de la forme Ej,i et retiendra, pour le lecteur L1, une information de la forme Ej,i+a, avec a>0. Inversement, dans le cas où la cale 1 a été placée correctement (voir figure 3), le système d'analyse retiendra pour le lecteur L1 une information de la forme Ej,i et retiendra, pour le lecteur L2, une information de la forme Ej,i+a, avec a>0. Apte, ainsi qu'il a été évoqué ci-dessus, à différentier les lecteurs L1 et L2 entre eux, le système d'analyse pourra ainsi déduire des informations de la forme Ej,i et Ej,i+a retenues pour chacun d'entre eux une information représentative du sens de placement de la cale 1 relativement à la succession des étiquettes E le long du chemin d'accès au quai Q.

Ainsi qu'il a été précédemment évoqué, le système d'analyse recueille également du détecteur de proximité une information représentative de la proximité de la cale 1 avec la roue du véhicule V contre laquelle elle doit être placée.

Selon une autre de ses caractéristiques, l'invention prévoit que le système d'analyse commande des moyens d'affichage et de signalisation 3 avantageusement préférentiellement disposés au niveau du quai Q pour indiquer au personnel de ce quai si les opérations de chargement et/ou de déchargement du véhicule V peuvent ou non être entreprises.

Plus précisément, l'invention prévoit que, dans le cas où le résultat de la comparaison des informations reçues des étiquettes de radio-identification et retenues pour chacun des lecteurs indique que la cale 1 n'est pas placée correctement au regard du sens de succession des étiquettes E le long du chemin d'accès au quai Q, ou dans le cas où l'information recueillie du détecteur de proximité indique que la cale n'est pas placée suffisamment près de la roue du véhicule V, le système d'analyse commande les moyens d'affichage et de signalisation 3 pour indiquer au personnel du quai que les opérations de chargement et/ou de déchargement du véhicule V ne peuvent pas être entreprises. Un tel affichage peut, par exemple, prendre la forme de l'allumage d'un témoin lumineux de couleur rouge au niveau du quai, éventuellement en association avec la mise en marche d'un signal sonore d'alerte.

Inversement, dans le cas où l'ensemble des informations reçues à la fois du détecteur de proximité et des lecteurs L1 et L2 indiquent que la cale 1 est, d'une part, placée au plus près de l'une des roues du véhicule V, et, d'autre part, disposée dans un sens correct relativement au sens de succession des étiquettes de radio-identification E le long du chemin d'accès au quai, l'invention prévoit que le système d'analyse commande les moyens d'affichage et de signalisation pour indiquer au personnel du quai que les opérations de chargement et/ou de déchargement du véhicule peuvent être entreprises. A titre d'exemple non exclusif, un tel affichage peut prendre la forme de l'allumage d'un témoin lumineux de couleur verte au niveau du quai.

Une fois l'opération de manutention terminée sur le véhicule V, la cale 1 est retirée de la roue contre laquelle elle était placée. Le détecteur de mouvement qu'elle comporte transmet alors une information de mouvement au système d'analyse. Lorsque la cale 1 est remise en place sur le support de cale 2 avec lequel elle a été appariée, le détecteur de présence de la cale transmet à son tour au système d'analyse une information de retour de la cale sur son support.

L'invention propose ainsi des moyens et un équipement simples pour que des opérations de manutention (chargement, déchargement de marchandises) sur un véhicule stationné au regard d'un quai d'un ensemble logistique puissent être entreprises dans des conditions satisfaisantes en ce qui concerne l'immobilisation de ce véhicule au regard de ce quai.

Il est à noter que, dans un souci d'amélioration du fonctionnement et de la fiabilité du fonctionnement d'un tel équipement, l'invention présente un ensemble de caractéristiques complémentaires des caractéristiques qui viennent d'être évoquées.

Selon l'une de ces caractéristiques complémentaires, l'invention prévoit que le système d'analyse commande les moyens d'affichage 3 pour indiquer que l'opération de chargement et/ou de déchargement ne peut être entreprise si les informations en provenance du détecteur de proximité et en provenance des lecteurs L1 et L2 n'ont pas été reçues par le système d'analyse dans un laps de temps préalablement fixé à partir de l'instant auquel les détecteurs de mouvement et de présence de la cale sur son support de cale 2 lui ont transmis l'information mentionnée plus haut de mouvement de la cale 1 et de retrait de celle-ci de son support. A titre d'exemple non limitatif, le laps de temps préalablement fixé cité ci-dessus, analogue à une temporisation des moyens du système d'analyse, peut être fixé sur la base d'un temps moyen nécessaire à l'installation de la cale contre une roue d'un véhicule à quai.

Par ailleurs, quel que soit le mode de réalisation retenu pour l'invention, en particulier que la cale cesse de transmettre ses informations de placement une fois que sa position a été validée ou qu'à l'inverse, elle continue à transmettre, à intervalles réguliers (à titre d'exemple non limitatif à intervalles de quelques secondes, typiquement de 3 à 20), ses informations de position au système d'analyse, l'invention prévoit des moyens automatiques d'avertissement des opérateurs de l'état d'immobilisation du véhicule tout au long des opérations de chargement et/ou de déchargement des marchandises.

Pour ce faire, l'invention prévoit, dès lors qu'un signal est transmis au système d'analyse par le détecteur de mouvement, signal représentatif d'un déplacement significatif (c'est-à-dire représentatif d'un déplacement dont l'amplitude est supérieure à un seuil préalablement défini), qu'une nouvelle validation de la présence d'un pneu au voisinage immédiat de la cale 1 soit réalisée. Si, dans un laps de temps préalablement défini à partir de l'instant auquel le système d'analyse a reçu une information de mouvement significatif de la part du détecteur de mouvement, ce même système d'analyse n'a pas reçu, du détecteur de proximité, une information de voisinage immédiat d'un pneu du véhicule, il commande alors une validation du retour de la cale 1 sur le support avec lequel elle a été appariée, et commande les moyens d'affichage 3 pour signaler une erreur (par exemple par allumage d'un témoin lumineux de couleur orange ou rouge) en l'absence de réception, dans un laps de temps donné, en provenance du détecteur de présence, d'un signal représentatif du retour de la cale sur le support 2 avec lequel elle a été appariée. En d'autres termes, dès lors qu'un signal de mouvement significatif est émis par la cale, une temporisation est déclenchée au niveau du système d'analyse, à l'issue de laquelle, si aucune information de proximité immédiate d'un pneu (représentative de la proximité immédiate du véhicule) n'a été reçue, une nouvelle temporisation est déclenchée au niveau du système d'analyse. Si, à l'issue de cette deuxième temporisation, aucun signal de présence de la cale sur le support avec lequel elle a été appariée n'a été reçu par le système d'analyse, celui-ci commande alors les moyens d'affichage 3 pour signaler une erreur.

Ceci permet notamment d'éviter l'affichage indu de signaux d'erreur au niveau des moyens d'affichage 3, par exemple si le véhicule se déplace légèrement lors des opérations de manutention et que ce déplacement, suffisamment léger pour ne pas mettre en danger les opérateurs, soit toutefois suffisant pour que ledit détecteur de proximité ne transmette plus l'information selon laquelle la cale 1 est placée contre un pneu du véhicule. Alternativement, la sensibilité dudit détecteur de proximité peut également être ajustée pour que ne soient transmises par celui-ci que les informations relatives à un éloignement de la cale par rapport au pneu supérieur à un éloignement seuil préalablement défini. II s'ensuit égaiement que ceci permet de garantir l'immobilisation du véhicule dans des conditions satisfaisantes pour la sécurité des opérateurs et des marchandises sur la totalité de la durée des opérations de manutention.

Ceci évite également toute perte de cale, et permet de s'assurer que la cale est, en dehors de ses périodes d'utilisation, bien en situation de charge par le dispositif d'alimentation électrique associé au support de cale 2, garantissant ainsi un fonctionnement stable et reproductible de l'équipement selon l'invention dans tous les cas.

Par ailleurs, l'invention prévoit que l'appariement d'une cale avec un support de cale ne puisse être réalisé qu'à la condition qu'aucune cale préalablement appariée avec ce support ne soit en cours d'utilisation. Ceci permet d'éviter notamment toute erreur pouvant résulter du replacement, par inadvertance, d'une cale sur un support autre que celui avec lequel elle a été appariée alors que la cale correspondant à ce support est en cours d'utilisation. A cette fin, le système d'analyse commande les moyens d'affichage 3 pour indiquer une erreur en cas de tentative de replacement d'une cale sur un support de cale 2 différent de celui avec lequel elle a été appariée tant que la cale préalablement appariée avec ce support de cale est en cours d'utilisation. Ceci est particulièrement simple à réaliser dans le cas où la cale transmet, à intervalles réguliers, au système d'analyse, tout ou partie de ses informations de placement (informations reçues des étiquettes de radio-identification disposées le long du chemin d'accès au quai et/ou information de proximité d'un pneu d'un véhicule).

Ainsi qu'il a été évoqué plus haut, il est à noter que, dans le cas où l'ensemble logistique comporte plusieurs quais, l'invention peut indifféremment prévoir que chacun des quais soit équipé d'un système d'analyse, ou qu'un système central d'analyse et de supervision gère l'ensemble des quais. De même l'invention peut indifféremment prévoir que des moyens d'affichage 3 soient disposés sur chacun des quais, ou que l'affichage soit centralisé pour l'ensemble des quais, avec un dispositif d'identification de chaque quai, ou que les deux systèmes d'affichage soient concomitamment utilisés (affichage au niveau de chacun des quais et affichage centralisé).

Quelle que soit la configuration retenue pour les moyens d'affichage, dans le cas où chacun des quais est équipé d'un système d'analyse, les détecteurs et lecteurs placés sur une cale quelconque retirée de son support pour être disposée contre une roue d'un véhicule stationné au regard de l'un quelconque des quais transmettront les informations qu'ils reçoivent à l'ensemble des systèmes d'analyse de tous les quais. L'invention prévoit, selon une autre de ses caractéristiques, que seul le système d'analyse correspondant au quai équipé du support avec lequel la cale considérée a préalablement été appariée commandera les moyens de traitement qu'il comporte pour analyser ces informations. II s'ensuit que seuls les moyens d'affichage 3 gouvernés par ce système d'analyse seront commandés par celui-ci.

Ce point particulier présente un double avantage. En premier lieu, il permet de simplifier l'installation, et, par là, d'en réduire les coûts. En effet, il permet que le même matériel puisse être utilisé pour tous les quais, tant pour ce qui concerne la cale que pour ce qui concerne les lecteurs, détecteurs, systèmes d'analyse et moyens d'affichage, sans nécessité de discrimination quelconque de l'un des matériels relativement aux autres. Ceci est notamment vrai en ce qui concerne les cales, qui peuvent ainsi indifféremment être utilisées sur l'un ou l'autre des quais de l'ensemble logistique, leur identification relativement au quai le long du chemin d'accès auquel elles seront placées se faisant par le biais de leur appariement au support de cale associé à ce quai. Par ailleurs, il assure la modularité de l'installation selon l'invention, et, ainsi, son application potentielle pour de faibles coûts à des ensembles logistiques dont la capacité en termes de quais peut être appelée à varier.

L'invention telle qu'elle vient d'être décrite ne saurait toutefois se limiter aux modes de réalisation et moyens qui ont été évoqués ci-dessus, mais elle s'étend à tous moyens équivalents et à toute combinaison techniquement opérante de tels moyens. En particulier, à titre d'exemple non limitatif, le dispositif mobile de repérage 1, ici une cale destinée à être placée contre une roue d'un véhicule stationné au regard d'un quai, peut être de tout type autre qu'une telle cale, dans la mesure où il est représentatif, par sa position et son sens de placement au regard de la succession d'étiquettes de radio-identification le long du chemin d'accès au quai, des conditions d'immobilisation du véhicule considéré.

De même, à titre d'exemple non exclusif, le nombre de lecteurs d'étiquettes de radio-identification que comporte un tel dispositif mobile de repérage n'est pas limité à deux, ce chiffre étant le nombre minimal nécessaire au fonctionnement de l'équipement selon l'invention tel qu'il a été décrit ci-dessus.

## Revendications

1. Equipement de sécurité pour quais de chargement et déchargement de marchandises vers et à partir de véhicules amenés à quai, dans lequel à chaque quai il est associé :
- un dispositif mobile de repérage (1) à placer dans une position déterminée par rapport à un véhicuie amendé à quai, **caractérisé en ce qu**'il comporte :
- les étiquettes de radio-identification (E) disposées en série le long d'un chemin d'accès au quai pour les véhicules de transport de marchandises à charger ou décharger, lesdites étiquettes étant émettrices de signaux porteurs d'une information d'identification d'étiquette caractéristique de l'ordre de succession de chaque étiquette dans la série,
- ledit dispositif mobile de repérage étant porteur d'au moins deux lecteurs transmetteurs d'ondes radio (L1, L2) aptes à capter les signaux émis par deux étiquettes différentes de ladite série pour renvoyer à destination d'un système d'analyse des signaux porteurs des informations d'identification d'étiquette propres à chacune d'elle et d'informations d'attribut de lecteur distinguant les deux lecteurs l'un de l'autre,
- ainsi que les moyens de traitement, au niveau dudit système d'analyse, pour déduire de l'ensemble desdites informations d'identification d'étiquette et d'attribut de lecteur une validation du placement dudit dispositif de repérage dans ladite position déterminée, en respectant un sens prédéfini entre les deux lecteurs relativement à l'ordre de succession des étiquettes dans la série.

2. Equipement selon la revendication 1, **caractérisé en ce que** le dispositif mobile de repérage (1) comporte un détecteur de proximité apte à transmettre audit système d'analyse une information représentative de la proximité dudit dispositif de repérage et du véhicule par rapport auquel ce dernier doit être placé.

3. Equipement selon l'une ou l'autre des revendications 1 ou 2, **caractérisé en ce que** le dispositif mobile de repérage (1) comporte un détecteur de mouvement apte à transmettre audit système d'analyse une information représentative du mouvement dudit dispositif de repérage.

4. Equipement selon l'une quelconque des revendications 1 à 3, **caractérisé en ce qu'**il est également associé, à chaque quai, un support de dispositif de repérage (2) relié à un dispositif d'alimentation et de rechargement électrique dudit dispositif de repérage.

5. Equipement selon la revendication 4, **caractérisé en ce que** ledit dispositif de support (2) comporte un détecteur de présence apte à transmettre audit système d'analyse une information représentative de la présence ou de l'absence du dispositif mobile de repérage sur ledit support.

6. Equipement selon l'une quelconque des revendications 1 à 5, **caractérisé en ce que** ledit dispositif de support (2) est équipé de moyens de lecture d'une information d'identification portée par ledit dispositif mobile (1) ainsi que de moyens de transmission de cette information audit système d'analyse pour que celui-ci réalise l'appariement dudit dispositif mobile audit dispositif de support.

7. Equipement selon l'une quelconque des revendications 1 à 6, **caractérisé en ce que** le dispositif mobile de repérage (1) est une cale destinée à être placée contre une roue d'un véhicule stationné à quai pour compléter son immobilisation.

8. Utilisation d'un équipement selon l'une ou l'autre des revendications 6 ou 7 pour valider la réalisation d'opérations de manutention de marchandises vers ou depuis un véhicule stationné au regard d'un quai, **caractérisée en ce que**, dès lors que ledit détecteur de présence transmet audit système d'analyse une information d'absence du dispositif de repérage (1), ledit système d'analyse commande des moyens d'affichage (3) pour indiquer que lesdites opérations de manutention peuvent être entreprises si les conditions suivantes sont cumulativement remplies :
- réception, dans un laps de temps préalablement défini, par le système d'analyse, d'une information transmise par ledit détecteur de proximité représentative de la proximité dudit dispositif de repérage et dudit véhicule,
- validation, par les moyens de traitement dudit système d'analyse, du placement dudit dispositif de repérage dans ladite position déterminée, en respectant un sens prédéfini entre les deux lecteurs relativement à l'ordre de succession des étiquettes dans la série.

9. Utilisation d'un équipement selon l'une ou l'autre des revendications 6 ou 7 pour valider la réalisation d'opérations de manutention de marchandises vers ou depuis un véhicule stationné au regard d'un quai, **caractérisée en ce que**, dès lors que lesdits moyens d'affichage (3) ont été commandés par ledit système d'analyse conformément à la revendication 8 et que lesdites opérations de manutention ont été achevées, ledit système d'analyse commande lesdits moyens d'affichage (3) pour indiquer que le dispositif mobile de repérage peut à nouveau être utilisé pour un autre véhicule si les conditions suivantes sont cumulativement remplies :
- réception, par ledit système d'analyse, d'une information de mouvement du dispositif mobile de repérage transmise par ledit détecteur de mouvement,
- absence d'information de proximité du dispositif mobile de repérage (1) et du véhicule,
- réception, par ledit système d'analyse, dans un laps de temps préalablement défini décompté à partir de l'instant de réception dudit signal de mouvement, d'une information de présence du dispositif mobile de repérage sur son support (2).

## Claims

1. Safety equipment for bays used for loading and unloading freight on and from vehicles brought to the bay, where each bay is provided with a portable locating device (1) to be placed in a given position relative to a vehicle brought to the bay, **characterised in that** it comprises:
radio identification tags (E) disposed in series along an access lane to the bay for the freight transport vehicles to be loaded or unloaded, said tags emitting signals carrying tag identification information characteristic of the order of succession of each tag in the series,
said portable locating device carrying at least two readers transmitting radio waves (L1, L2) capable of picking up the signals emitted by two different tags in said series with a view to sending signals carrying tag identification information specific to each of them and reader attribute information distinguishing the two readers from one another to an analysis system,
as well as processing means incorporated in said analysis system which derive from all of said tag identification and reader attribute information a validation for the positioning of said locating device in said given position, conforming to a predefined direction between the two readers relative to the order of succession of the tags in the series.

2. Equipment as claimed in claim 1, **characterised in that** the portable locating device (1) has a proximity sensor configured to transmit information representing the proximity of said locating device and the vehicle relative to which the latter should be positioned to said analysis system.

3. Equipment as claimed in one of claims 1 or 2, **characterised in that** the portable locating device (1) has a motion sensor configured to transmit information representing the motion of said locating device to said analysis system.

4. Equipment as claimed in any one of claims 1 to 3, **characterised in that** each bay is also provided with a locating device support (2) connected to a device for supplying and recharging said locating device with electrical power.

5. Equipment as claimed in claim 4, **characterised in that** said support device (2) has a presence sensor configured to transmit information relating to the presence or absence of the portable locating device on said support to said analysis system.

6. Equipment as claimed in any one of claims 1 to 5, **characterised in that** said support device (2) is equipped with means for reading identification information carried by said portable device (1) as well as means for transmitting this information to said analysis system so that the latter matches said portable device with said support device.

7. Equipment as claimed in any one of claims 1 to 6, **characterised in that** the portable locating device (1) is a chock designed to be positioned against a wheel of a vehicle parked alongside the bay to finalise its immobilisation.

8. Use of equipment as claimed in one of claims 6 or 7 to validate the performance of freight handling operations to or from a vehicle parked facing a bay, **characterised in that** when the presence sensor transmits information indicating the absence of the locating device (1) to the analysis system, said analysis system issues a command to the display means (3) to indicate that said handling operations may be carried out if the following conditions are cumulatively met:
- the analysis system receives within a pre-definable period of time information transmitted by said proximity sensor representing the proximity of said locating device and said vehicle,
- the processing means of said analysis system validates the positioning of said locating device in said given position, conforming to a predefined direction between the two readers relative to the order of succession of the tags in the series.

9. Use of equipment as claimed in one of claims 6 or 7 to validate the performance of freight handling operations to or from a vehicle parked facing a bay, **characterised in that** when a command has been issued by said analysis system to said display means (3) on the basis claimed in claim 8 and said handling operations have been completed, said analysis system issues a command to said display means (3) to indicate that the portable locating device can be used again for another vehicle if the following conditions are cumulatively met:
- said analysis system receives information about the motion of theportable locating device transmitted by said motion sensor,
- there is an absence of proximity information about the portable locating device (1) and vehicle,
- said analysis system receives, within a pre-definable period of time with effect from the instant at which said motion signal was received, information about the presence of the portable locating device on its support (2).

## Patentansprüche

1. Sicherheitseinrichtung für Rampen zur Be- und Entladung von Waren in und aus an die Rampe herangeführten Fahrzeugen, bei der jeder Rampe zugeordnet ist:
- eine mobile Kennzeichnungsvorrichtung (1), die in eine bestimmte Position in Bezug auf ein an die Rampe gebrachtes Fahrzeug anzuordnen ist,
- **dadurch gekennzeichnet, dass** sie umfasst:
- RFID-Transponder (E), die in Reihe entlang einem Zugangsweg zu der Rampe für die Transportfahrzeuge mit zu ladenden oder entladenden Waren angeordnet sind, wobei die Transponder Sender von Signalen sind, die eine kennzeichnende Transponder-Information über die Reihenfolge jedes Transponders in der Reihe tragen,
- wobei die mobile Kennzeichnungsvorrichtung mindestens zwei Lesevorrichtungen (L1, L2) zum Senden von Funkwellen trägt, die geeignet sind, die von zwei unterschiedlichen Transpondern der Reihe emittierten Signale zu erfassen, um an ein Analysesystem Signale zu schicken, die die kennzeichnenden Transponder-Informationen, die jedem Transponder zugehörig sind, und Informationen der Lesegeräteigenschaft, die die zwei Lesegeräte voneinander unterscheiden, überbringen,
- sowie Verarbeitungsmittel an dem Analysesystem, um aus der Gesamtheit der Transponder-Informationen und der Lesegeräteigenschaft-Informationen eine Bestätigung der Platzierung der Kennzeichnungsvorrichtung an der bestimmten Position herzuleiten, wobei eine vorgegebene Richtung zwischen den zwei Lesegeräten relativ zur Reihenfolge der Transponder in der Reihe berücksichtigt wird.

2. Einrichtung nach Anspruch 1, **dadurch gekennzeichnet, dass** die mobile Kennzeichnungsvorrichtung (1) einen Näherungsdetektor umfasst, der geeignet ist, dem Analysesystem eine Information zu senden, die repräsentativ für die Nähe der Kennzeichnungsvorrichtung und des Fahrzeugs ist, in Bezug auf welche Letzteres angeordnet werden muss.

3. Einrichtung nach einem oder dem anderen der Ansprüche 1 oder 2, **dadurch gekennzeichnet, dass** die mobile Kennzeichnungsvorrichtung (1) einen Bewegungsdetektor umfasst, der geeignet ist, dem Analysesystem eine Information zu senden, die repräsentativ für die Bewegung der Kennzeichnungsvorrichtung ist.

4. Einrichtung nach einem beliebigen der Ansprüche 1 bis 3, **dadurch gekennzeichnet, dass** jeder Rampe gleichfalls ein Träger (2) für die Kennzeichnungsvorrichtung zugeordnet ist, der an eine elektrische Versorgungs- und Aufladevorrichtung der Kennzeichnungsvorrichtung angeschlossen ist.

5. Einrichtung nach Anspruch 4, **dadurch gekennzeichnet, dass** die Trägervorrichtung (2) einen Anwesenheitsdetektor aufweist, der geeignet ist, dem Analysesystem eine Information zu senden, die repräsentativ für die Anwesenheit oder Abwesenheit der mobilen Kennzeichnungsvorrichtung an dem Träger ist.

6. Einrichtung nach einem beliebigen der Ansprüche 1 bis 5, **dadurch gekennzeichnet, dass** die Trägervorrichtung (2) mit Mitteln zum Lesen einer von der mobilen Vorrichtung (1) getragenen Identifikationsinformation sowie mit Mitteln zur Übertragung dieser Information an das Analysesystem ausgerüstet ist, damit dieses das paarweise Zusammenlegen der mobilen Vorrichtung und der Trägervorrichtung realisiert.

7. Einrichtung nach einem beliebigen der Ansprüche 1 bis 6, **dadurch gekennzeichnet, dass** die mobile Kennzeichnungsvorrichtung (1) ein Bremsklotz ist, der vorgesehen ist, gegen das Rad eines an der Rampe stehenden Fahrzeugs angelegt zu werden, um seine Blockierung zu vervollständigen.

8. Verwendung einer Einrichtung nach dem einen oder dem anderen der Ansprüche 6 oder 7, um die Realisierung von Förderoperationen der Waren zu oder aus dem vor der Rampe stehenden Fahrzeug zu bestätigen, **dadurch gekennzeichnet, dass**, sobald der Anwesenheitsdetektor dem Analysesystem eine Information des Nichtvorhandenseins der Kennzeichnungsvorrichtung (1) sendet, das Analysesystem Anzeigemittel (3) steuert, um anzuzeigen, dass die Förderoperationen vorgenommen werden können, wenn die folgenden Bedingungen kumulativ erfüllt sind:
- Empfang durch das Analysesystem innerhalb einer vorher bestimmten Zeitspanne einer von dem Näherungsdetektor gesendeten Information, die für die Nähe der Kennzeichnungsvorrichtung und des Fahrzeugs repräsentativ ist,
- Bestätigung der Anordnung der Kennzeichnungsvorrichtung in der vorbestimmten Position durch die Verarbeitungsmittel, indem eine vorbestimmte Richtung zwischen den Lesegeräten relativ zu der Reihenfolge der Transponder in der Reihe berücksichtigt wird.

9. Verwendung einer Einrichtung nach dem einen oder dem anderen der Ansprüche 6 oder 7, um die Realisierung von Förderoperationen der Waren zu oder aus dem vor der Rampe stehenden Fahrzeug zu bestätigen, **dadurch gekennzeichnet, dass**, sobald die Anzeigemittel (3) von dem Analysesystem gemäß dem Anspruch 8 gesteuert wurden und die Förderoperationen durchgeführt wurden, das Analysesystem die Anzeigemittel (3) steuert, um anzuzeigen, dass die mobile Kennzeichnungsvorrichtung erneut für ein anderes Fahrzeug verwendet werden kann, wenn die folgenden Bedingungen kumulativ erfüllt sind:
- Empfang einer Information der Bewegung der mobilen Kennzeichnungsvorrichtung, die von dem Bewegungsdetektor gesendet wird, durch Analysesystem,
- Nichtvorhandensein einer Näherungsinformation der mobilen Kennzeichnungsvorrichtung (1) und des Fahrzeugs,
- Empfang durch das Analysesystem einer Information des Vorhandenseins der mobilen Kennzeichnungsvorrichtung auf ihrem Träger (2) in einer vorher bestimmten Zeitspanne, gerechnet von dem Moment des Empfangs des Bewegungssignals.
